# EUROPEAN PATENT SPECIFICATION

(11) **EP 3 193 004 B1**
(45) Date of publication and mention of the grant of the patent: **05.12.2018**
(21) Application number: 17154087.5
(22) Date of filing: 31.01.2017
(51) Int. Cl.: H01L 35/28, F02M 35/10, F02B 29/04

(54) **ELECTROMECHANICAL ACTUATOR FOR AN INTERNAL COMBUSTION ENGINE WITH A SYSTEM FOR COOLING ELECTRONIC COMPONENTS AND AN INTERNAL COMBUSTION ENGINE EQUIPPED WITH THIS ACTUATOR**
ELEKTROMECHANISCHER AKTUATOR FÜR EINE VERBRENNUNGSKRAFTMASCHINE MIT EINEM SYSTEM ZUR KÜHLUNG ELEKTRONISCHE KOMPONENTE UND VERBRENNUNGSKRAFTMASCHINE MIT DIESEM AKTUATOR
ACTUATEUR ÉLECTROMÉCANIQUE POUR UN MOTEUR À COMBUSTION INTERNE AVEC UN SYSTÈME POUR REFROIDIR DES COMPOSANTS ÉLECTRONIQUES ET MOTEUR À COMBUSTION INTERNE AVEC CET ACTUATEUR.

(30) Priority: 01.12.2015 IT UB20156044
(43) Date of publication of application: 19.07.2017
(73) Proprietor: Magneti Marelli S.p.A., 20011 Corbetta (MI) (IT)
(72) Inventor: PEZZOTTA, Federico, 86036 MONTENERO DI BISACCIA (IT); MUSOLESI, Stefano, 40122 BOLOGNA (IT); AVANZI, Matteo, 40014 CREVALCORE (IT)
(74) Representative: Musconi, Roberta

(56) References cited:
- US-A1- 2005 056 261
- US-A1- 2009 018 750

## Description

The present invention relates to an electromechanical actuator for an internal combustion engine equipped with a system for cooling electronic components.

The present invention also relates to an internal combustion engine equipped with an electromechanical actuator comprising a system for cooling electronic components.

As is known, an internal combustion engine supercharged by means of a turbocharger system comprises a head defining a plurality of cylinders, each of which is connected to an inlet manifold by at least one respective inlet valve and to an exhaust manifold by at least one respective exhaust valve, and inside which fuel is injected by an injector. The inlet manifold receives fresh air (i.e. air coming from the outside environment) through an inlet duct regulated by a butterfly valve.
Internal combustion engines also comprise a plurality of electromechanical drive actuators for operating certain devices, amongst which, for example, the butterfly valve. In turn, these actuators are provided with an electric motor that drives the movement of a shaft via a gear-drive transmission, an interface lever for operating the ancillary device and an actuator body that internally houses the electric motor and gear-drive transmission and is closed by a removable lid. The actuator body is usually made of die cast aluminium to give stiffness to the structure, the internal components being integral with the body and made of metal or plastic materials. The removable lid is instead made of a plastic material and also acts as support for the electronic part, constituted, in particular, by a contactless sensor for detecting the angular position of the output shaft.

Since some under-bonnet electromechanical actuators are made to operate in environments with temperatures exceeding 160°C, it is necessary to provide a dedicated cooling circuit.

To solve this problem, electromechanical actuators equipped with cooling circuits for the actuator body have been proposed. In particular, the cooling circuit comprises a seat made in the actuator body that accepts a tube made of any material with a good heat-transfer capacity that is in hydraulic communication with a pump that circulates a coolant for cooling the various parts of the electromechanical actuator. Alternatively, the cooling circuit is implemented through a pipe housed inside a channel made directly in the actuator body.

Whereas document US2009018750 describes an electromechanical actuator for operating an ancillary device of an internal combustion engine, in particular for a butterfly valve, comprising an electric motor that, by means of a transmission, drives the rotation of a shaft designed for operating the ancillary device. The actuator also comprises: a plastic housing for holding the electric motor and the transmission, and closed by a lid, also made of a plastic material; an electronic component designed to detect the angular position of the shaft and supported by the lid; and a cooling circuit defined in the housing. The lid also acts as a heat sink element for cooling the electronic component by conduction, being made of a heat-conductive, non-magnetic material, and is arranged in contact with both the electronic component and the housing.

However, in the electromechanical actuators described up to now, it is necessary to use dedicated and rather expensive rotation sensors capable of operating at temperatures around 160°C, as these sensors are housed in the removable lid, which does not have a cooling system.

The object of the present invention is to provide an electromechanical actuator for an internal combustion engine equipped with a system for cooling electronic components, this electromechanical actuator being free of the drawbacks of the known art and, at the same time, simple and inexpensive to manufacture.

According to the present invention, an electromechanical actuator for an internal combustion engine is provided that is equipped with a system for cooling electronic components as claimed in the appended claims.
The present invention will now be described with reference to the accompanying drawings, which illustrate a non-limitative embodiment, in which:
- Figure 1 is a schematic view of a turbocharged internal combustion engine equipped with an electromechanical actuator;
- Figure 2 is a perspective view of the electromechanical actuator equipped with a system for cooling electronic components in Figure 1 and made in according to the present invention;
- Figure 3 is an enlarged view of a detail in Figure 2;
- Figure 4 is a perspective view from below of the electromechanical actuator in Figure 2;
- Figure 5 is a perspective and partially exploded view of the electromechanical actuator in Figure 2, and in which the figures indicated by a), b) and c) represent three different variants of a detail in Figure 5.

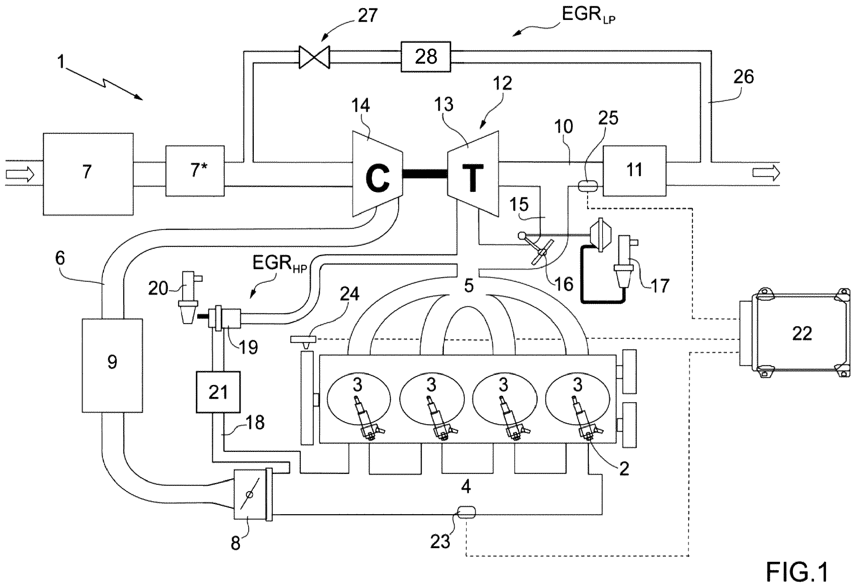

In Figure 1, reference numeral 1 indicates, as a whole, an internal combustion engine supercharged by means of a turbocharger system 2.

The internal combustion engine 1 comprises a number of cylinders 3 (in particular, four cylinders 3 are shown in Figure 1), each of which is connected to an inlet manifold 4 by at least one respective inlet valve (not shown) and to an exhaust manifold 5 by at least one respective exhaust valve (not shown). The inlet manifold 4 receives fresh air (i.e. air coming from the outside environment) through an inlet duct 6, which is fitted with an air filter 7 and is regulated by a butterfly valve 8. An intercooler 9 is arranged along the inlet duct 6 for the purposes of cooling the aspirated air. An exhaust pipe 10 is connected to the exhaust manifold 5 for feeding the exhaust gases produced by combustion to an exhaust system, which emits the exhaust gases produced by combustion into the atmosphere and normally comprises at least one catalytic converter 11 and at least one silencer (not shown) arranged downstream of the catalytic converter 11.

The turbocharger system 2 of the internal combustion engine 1 comprises a turbocharger 12 equipped with a turbine 13, which is arranged along the exhaust pipe 10 to rotate at high speed under the action of the exhaust gases expelled from the cylinders 3, and a compressor 14, which is arranged along the inlet duct 6 and is mechanically connected to the turbine 13 to be drawn into rotation by the turbine 13 so as to increase the pressure of the air fed through the inlet duct 6.

A bypass line 15 is provided along the exhaust pipe 10, which is connected in parallel with the turbine 13 such that its ends are connected upstream and downstream of the turbine 13; a wastegate valve 16 is arranged along the bypass line 15 that is able to regulate the flow of exhaust gases flowing through the bypass line 15 and is controlled by an actuator 17.

The internal combustion engine 1 also comprises a highpressure circuit EGR_{HP} that, in turn, comprises a bypass line 18 connected in parallel with the group formed by the cylinders 3, the inlet manifold 4 and the exhaust manifold 5. A Poff valve 19 is placed along the bypass line 18 that is able to regulate the flow of exhaust gases flowing through the bypass line 18 and is operated by an EGR solenoid 20. A heat exchanger 21 is arranged along the bypass line 18, downstream of the Poff valve 19, for cooling the exhaust gases leaving the exhaust manifold 5.

The internal combustion engine 1 is controlled by an electronic control unit 22, which superintend the operation of all the components of the internal combustion engine 1. The electronic control unit 22 is connected to a sensor 23 that measures the temperature and pressure of the gas mixture in the inlet manifold 4, to a sensor 24 that measures the rotational speed of the internal combustion engine 1, and to a sensor 25 (usually a linear oxygen probe of the UHEGO or UEGO type - of known type and not described in detail) that measures the air/fuel ratio of the exhaust gases upstream of the catalytic converter 11.

Lastly, the internal combustion engine 1 comprises a low-pressure circuit EGR_{LP} that, in turn, comprises a bypass line 26 located along the exhaust pipe 10; the bypass line 26 is connected in parallel with the turbocharger 12. An EGR valve 27 is placed along the bypass line 26 that is able to regulate the flow of exhaust gases flowing through the bypass line 26. A heat exchanger 28 is arranged along the bypass line 26, upstream of the valve 27, for cooling the exhaust gases leaving the exhaust manifold 5 and entering the compressor 14. According to one alternative, the low-pressure circuit EGR_{LP} comprises a three-way mixer device arranged at the intersection between the exhaust pipe 10 and the inlet duct 6 and has the function of regulating the mixing of exhaust gases coming from the exhaust pipe 10 with fresh air in the inlet duct 6.

The low-pressure circuit EGR_{LP} starts from the exhaust pipe 10 downstream of the catalytic converter 11 so as to take exhaust gases that have already been treated by the catalytic converter 11 and are which have a pressure only slightly above atmospheric pressure; in this way, the exhaust gases recirculated by the bypass line 26 are "cleaner", i.e. they contain a smaller amount of polluting substances. This configuration is also known as "Long-Route" EGR, as the bypass line 26 must be longer than normal in order to arrive downstream of the catalytic converter 11.

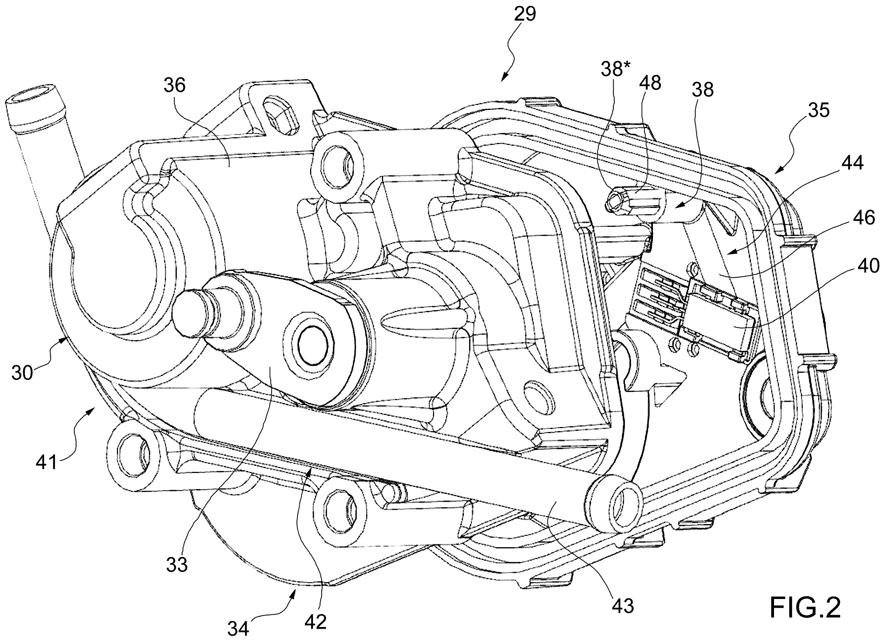

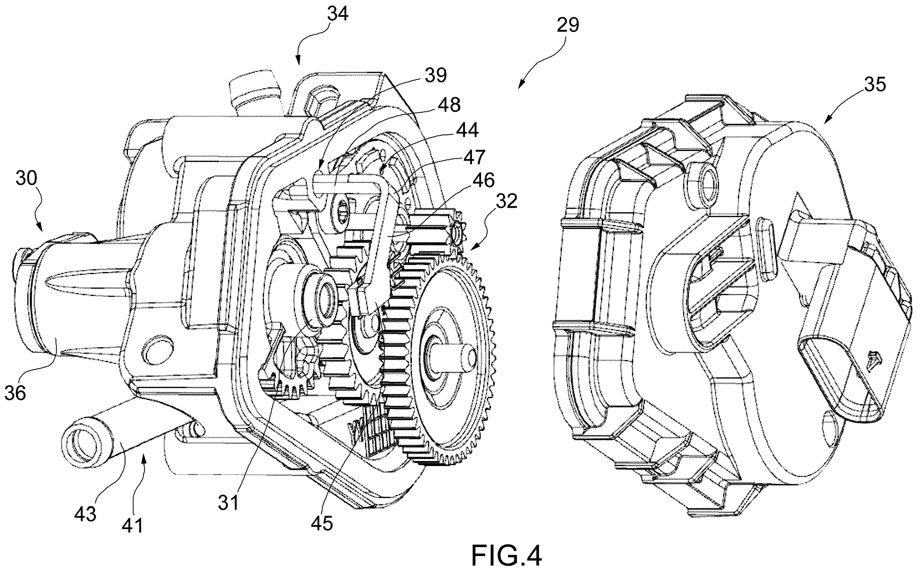

An electromechanical actuator 29 is generically indicated in Figures 2 to 5. The electromechanical actuator 30 can be any type of electromechanical actuator 30 for operating an ancillary device of the internal combustion engine 1, for example the actuator 17 configured for controlling the wastegate valve 16. Alternatively, the electromechanical actuator 17 could be made to control any of the following components of the internal combustion engine 1: the butterfly valve 8, the EGR solenoid 20 that controls the Poff valve 19 designed to regulate the flow of exhaust gases flowing through bypass line 18, the solenoid that controls the EGR valve 27 designed to regulate the flow of exhaust gases flowing through bypass line 26, the solenoid that controls the three-way mixer device arranged at the intersection between the exhaust pipe 10 and the inlet duct 6, and the devices equipping the turbocharger 12 (such as blades and/or valves, for example).

The electromechanical actuator 29 comprises an electric motor 30 that drives the movement of a shaft 31 via a gear-drive transmission 32. The transmission 32 can be alternatively implemented by using different solutions that envisage, for example, the use of belts, etc. The ancillary device of the internal combustion engine 1 can be operated by an interface lever 33 or via a geometry obtained directly on the shaft 31, in particular at the upper end. In the case where operation of the ancillary device of the internal combustion engine 1 takes place via the interface lever 33, the latter is operated by the protruding upper end of the shaft 31, to which it is connected. The interface lever 33 is integral with the protruding upper end 3 of the shaft 31, with any type of connection being used for their coupling, for example, by welding (in particular, laser welding).

The electromechanical actuator 29 comprises an actuator body 34 that houses the gear-drive transmission 32 and the electric motor 30 and is closed by a removable lid 35 fitted with an O-ring to ensure adequate sealing. In particular, the electric motor 30 is arranged in a tubular housing 36 of the actuator body 34 located next to the interface lever 33 and is kept in a certain position inside the tubular housing 36 by a metal plate provided with a pair of female electrical connectors (not shown), which are electrically connected to the electric motor 30 and are designed to be engaged by a pair of respective male electrical connectors 37 provided in the removable lid 35. Finally, the removable lid 35 comprises an anti-rotation pin 38 intended to facilitate assembly of the electromechanical actuator 29 (in particular, the centring of the removable lid 35 on the actuator body 34), which, in use, engages a specially provided seat 39 made in the actuator body 34.

According to a preferred variant, the actuator body 34 is monolithic (i.e. formed by a single seamless piece) and is constituted entirely of a metal material, in particular aluminium or steel, preferably stainless steel, or copper. The removable lid 35 is instead made of a plastic material. Lastly, the electromechanical actuator 30 comprises a contactless rotation sensor 40, which faces the shaft 31 to detect the angular position of the shaft 31 and is supported by the removable lid 35.

The electromechanical actuator 30 also comprises a cooling circuit 41 that, in turn, comprises a seat 42 made in the actuator body 34 that accepts a tube 43 made of any material with a good heat-transfer capacity such as, for example, steel, preferably stainless steel, copper or aluminium.

In plan, both the seat 42 and the tube 43 are substantially L-shaped. The tube 43 is in hydraulic communication with a pump (not shown) that circulates a coolant and feeds it through the tube 43 for cooling the various parts of the electromechanical actuator 34.

The actuator body 34 is made by casting (usually die-casting) and, if necessary, is subsequently machined. In other words, the first material that constitutes the actuator body 34 is injection-overmoulded to define the seat 42 made to house the tube 43. The tube 43 is inserted in the seat 42 made in the actuator body 34 once the casting process of the actuator body 34 is completed. In particular, once the casting process of the actuator body 34 is completed, a trace of a structural thermosetting resin is applied on the bottom of the seat 42. According to an alternative variant that is not shown, the cooling circuit 41 comprises a pipe housed inside a channel made in the actuator body 34. The material that forms the actuator body 34 is injection-overmoulded around the pipe so that the outer surface of the pipe is arranged in contact with the inner surface of the channel; if necessary, the channel can be subsequently machined.

Lastly, the electromechanical actuator 29 comprises a heat sink element 44 for cooling the sensor 40. In particular, the heat sink element 44 is constituted by an L-shaped bracket 44 of substantially uniform thickness. The heat sink element 44 is made of any material with a good heat-transfer capacity such as, for example, steel, preferably stainless steel, copper or aluminium. The heat sink element 44 is made of a non-magnetic material.

The heat sink element 44 comprises an end portion 45 with a flat top surface, which is made to act as a support for the sensor 40. According to a first variant, the end portion 45 has the same shape in plan as the sensor 40. In alternative, the end portion 40 has a size in plan that approximates by excess to the size of the sensor 40.

The heat sink element 44 also comprises a portion 46 embedded inside the removable lid 35, and a curved connection portion 47 between portion 46 and a portion 48. Portion 48 is arranged orthogonally to portion 47 and is preferably arranged inside the anti-rotation pin 38.

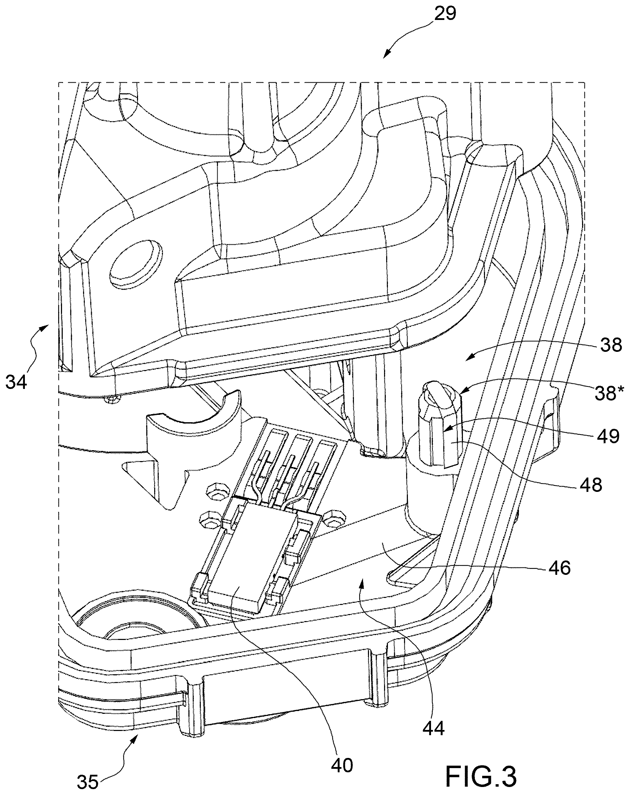

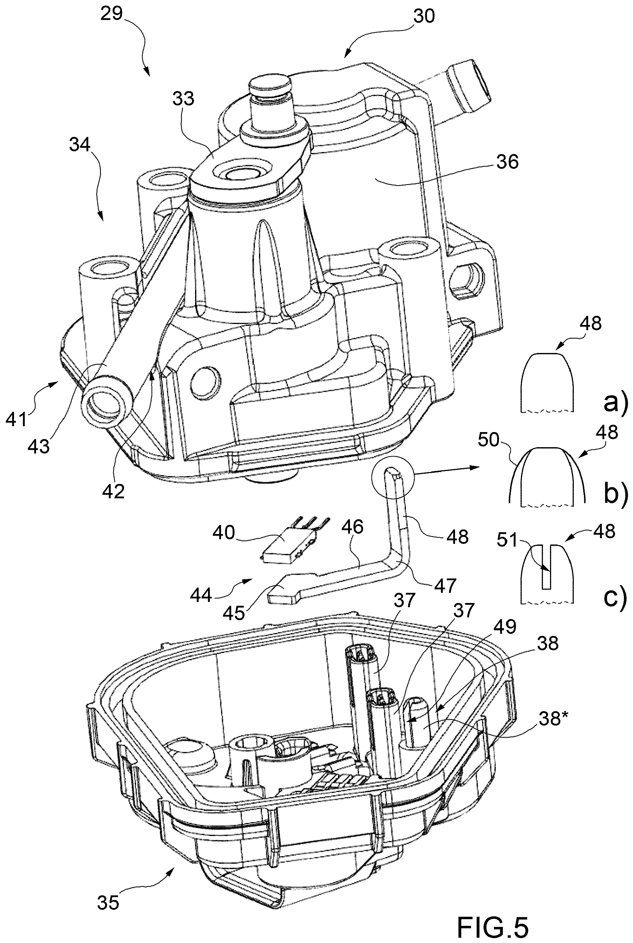

As is better shown in Figures 3 and 5, the anti-rotation pin 38 is provided with a notch 49 made in the upper end 38* through which portion 48 of the heat sink element 44 projects. In particular, the upper end 38* intended to engage the seat 39 of the actuator body 34 is provided with a notch 49 that extends on both the upper wall and the side wall and is substantially U-shaped; in this way, portion 48 protrudes both sideways and upwards from the notch 49 so as to increase the contact surface (and, in consequence, the heat exchange) between the heat sink element 44 and the actuator body 34.

In fact, in use, when the removable lid 35 is coupled to the actuator body 34, the anti-rotation pin 38 is inserted inside the specially provided seat 39 and portion 48, which protrudes from the notch 49, enters into contact with the inner surface of the seat 39 to allow cooling the sensor 40 by conduction, via a heat-carrying circuit created between the lower-temperature element (i.e. the actuator body 44 equipped with the cooling circuit 41) and the removable lid 35.

According to a first variant shown in Figure 5a, the upper end of portion 48 has a chamfered profile at the front to favour insertion into the seat 39.

According to a preferred variant shown in Figure 5b, because heat exchange is proportional to contact area, the upper end of portion 48 has a chamfered profile at the front and a spring element 50 is also provided to optimize contact of the heat sink element 44 with the inner surface of the seat 39.

According to a further variant shown in Figure 5c, the upper end of portion 48 has a chamfered profile at the front and is also provided with a vertical notch 51 to facilitate insertion and then expansion of the heat sink element 44 inside the seat 39.
According to further variants, the upper end of portion 48 has a chamfered profile at the front and is also provided with both the vertical notch 51 to facilitate insertion and then expansion of the heat sink element 44 inside the seat 39, and the spring element 50 to optimize contact of the heat sink element 44 with the inner surface of the seat 39. The upper end of portion 48 can have any profile made for interference fitting the heat sink element 44 to the actuator body 34.

According to a preferred variant, the removable lid 35 is injection-overmoulded around the heat sink element 44, which is inserted directly in the mould. According to a further variant, once the production phase of the removable lid 35 is completed, the heat sink element 44 is made integral with the removable lid 35 by gluing or by means of an interlocking connection.

Once the moulding process of the removable lid 35 or the connection of the heat sink element 44 to the removable lid 35 is completed, a trace of a structural thermosetting resin is deposited on the surface of portion 45 to allow connection of the sensor 40. According to a further variant, the sensor 40 is made integral with portion 45 by hot riveting, or by means of a gap-pad interposed between the sensor 40 and portion 45, or by means of an interlocking (snap-fit) connection.

It is obvious that the heat sink element 44 can have any shape, depending on the layout of the electromechanical actuator 29, and can be placed in contact with any conductor element interfacing with the removable lid 35. For example, according to one alternative embodiment, the heat sink element 44 is placed in contact with any gear or even with the fastening clips (not shown) for clamping the removable lid 35 to the actuator body 34.

It is also important to point out that the heat sink element 44 can find advantageous application in any electromechanical actuator 29 for cooling any electronic component.

The electromechanical actuator 29 hitherto described has several advantages. Firstly, the electromechanical actuator 29 is simple and inexpensive to manufacture, as it is easily producible via injection-overmoulding of the removable lid 35 around the heat sink element 44. Furthermore, the above-described electromechanical actuator 29 also enables cooling a normal sensor 40 integrated in the removable lid 35, which can therefore operate in environments with temperatures exceeding 160°C (avoiding the use of special sensors 40 capable of operating at temperatures exceeding 160°C).

## Claims

1. An electromechanical actuator (29) for operating an ancillary device of an internal combustion engine (1) comprising: an electric motor (30) that, through a transmission (32), drives the rotation of a shaft (31) designed to operate the ancillary device; a housing (34) made of a metallic material to hold the electric motor (30) and the transmission (32) and closed by a lid (35) made of a plastic material; an electronic component (40) designed to detect the angular position of the shaft (31) and supported by the lid (35); and a cooling circuit (41) defined in the housing (34); the electromechanical actuator (29) is **characterized in that** the cooling circuit (41) comprises a heat sink element (44) for cooling the electronic component (40) through conduction, wherein the heat sink element (44) is defined by a bracket (44) made of a heat-conductive, non-magnetic material, a first end of the bracket (44) is arranged in contact with the electronic component (40) and a second end of the bracket (44) is arranged in contact with the housing (34).

2. An actuator according to claim 1, wherein the heat sink element (44) comprises a first portion (45) having a flat upper surface, which acts as a support for the electronic component (40).

3. An actuator according to claim 1 or 2, wherein the heat sink element (44) comprises a second portion (48), which is interference-fitted into the housing (34).

4. An actuator according to one of the preceding claims, wherein the removable lid (35) comprises an anti-rotation pin (38), which, in use, engages a seat (39) made in the housing (34); the heat sink element (44) comprises a second portion (48), which engages the anti-rotation pin (38).

5. An actuator according to claim 4, wherein the upper end (38*) of the anti-rotation pin (38) is provided with an opening (49) made both in the upper wall and in the side wall and through which the heat sink element (44) projects.

6. An actuator according to one of the preceding claims, wherein the heat sink element (44) has an upper end with a rounded profile in contact with the housing (34).

7. An actuator according to any of the preceding claims, wherein the heat sink element (44) has an upper end provided with a spring element (50) in contact with the housing (34).

8. An actuator according to one of the preceding claims, wherein the heat sink element (44) has an upper end in contact with the housing (34), which is provided with a vertical notch (51) .

9. An actuator according to one of the preceding claims, wherein the removable lid (35) is injection-overmoulded around the heat sink element (44).

10. An actuator according to one of claims 1 to 8, wherein the heat sink element (44) is made integral with the lid (35) by gluing or by means of an interlocking connection.

11. An internal combustion engine (1), supercharged by means of a turbocharger (12) equipped with a turbine (13) and a compressor (14), and comprising an inlet duct (6) that connects the compressor (14) to an inlet manifold (4), which is fed with a flow of air coming from the compressor (14) and regulated by a butterfly valve (8) and is connected to a plurality of cylinders (3); and comprising a plurality of electromechanical actuators (31) for the operation of respective ancillary devices made according to any of claims 1 to 10.

## Patentansprüche

1. Elektromechanischer Stellantrieb (29) für den Betrieb eines Zusatzgerätes einer Brennkraftmaschine (1), umfassend einen Elektromotor (30), der mittels eines Getriebes (32) eine Welle (31) in eine Drehbewegung versetzt, welche dazu bestimmt ist, das Zusatzgerät in Betrieb zu versetzen; ein Gehäuse (34), das aus einem Metallmaterial gefertigt ist und in dem der Elektromotor (30) und das Getriebe (32) untergebracht sind und das durch einen Deckel (35) aus Kunststoff verschlossen ist; ein elektronisches Bauteil (40), das dazu bestimmt ist, die Winkelposition der Welle (31) zu detektieren und dass durch den Deckel (35) gestützt wird; und einen in dem Gehäuse (34) abgegrenzten Kühlkreislauf (41);
wobei der elektromechanische Stellantrieb (29) **dadurch gekennzeichnet ist, dass** der Kühlkreislauf (36) einen Kühlkörper (44) zur Kühlung des elektronischen Bauteils mittels Wärmeleitung umfasst, wobei der Kühlkörper (44) durch einen Bügel (44) definiert wird, der aus einem wärmeleitfähigen, nicht magnetischen Material besteht, wobei ein erstes Ende des Bügels (44) Kontakt mit dem elektronischen Bauteil (40) hat und ein zweites Ende des Bügels (44) Kontakt mit dem Gehäuse (34) hat.

2. Stellantrieb nach Anspruch 1, wobei der Kühlkörper (44) einen ersten Abschnitt (45) mit einer flachen Oberseite umfasst, der als Stütze für das elektronische Bauteil (40) dient.

3. Stellantrieb nach Anspruch 1 oder 2, wobei der Kühlkörper (44) einen zweiten Abschnitt (48) umfasst, der mittels Presspassung in dem Gehäuse (34) befestigt ist.

4. Stellantrieb nach einem der vorstehenden Ansprüche, wobei der abnehmbare Deckel (35) einen Verdrehsicherungsstift (38) umfasst, der im Betrieb in eine in dem Gehäuse (34) vorgesehene Aufnahme (39) eingreift; wobei der Kühlkörper (44) einen zweiten Abschnitt (48) umfasst, der in den Verdrehsicherungsstift (38) eingreift.

5. Stellantrieb nach Anspruch 4, wobei das obere Ende (38*) des Verdrehsicherungsstifts (38) eine Öffnung (49) aufweist, die in der Oberwand und in der Seitenwand ausgebildet ist und durch die der Kühlkörper (44) vorragt.

6. Stellantrieb nach einem der vorstehenden Ansprüche, wobei der Kühlkörper (44) ein oberes Ende mit einem abgerundeten Profil aufweist, das in Kontakt mit dem Gehäuse (34) steht.

7. Stellantrieb nach einem der vorstehenden Ansprüche, wobei der Kühlkörper (44) ein oberes Ende mit einem Federelement (50) aufweist, das Kontakt mit dem Gehäuse (34) steht.

8. Stellantrieb nach einem der vorstehenden Ansprüche, wobei der Kühlkörper (44) ein oberes Ende aufweist, das in Kontakt mit dem Gehäuse (34) steht und mit einer vertikalen Aussparung versehen ist.

9. Stellantrieb nach einem der vorstehenden Ansprüche, wobei der abnehmbare Deckel (35) mittels Spritzgießen um den Kühlkörper (44) geformt ist.

10. Stellantrieb nach einem der Ansprüche 1 bis 8, wobei der Kühlkörper (44) mittels Verleimen oder mittels einer formschlüssigen Verbindung einstückig mit dem Deckel (35) ausgeführt ist.

11. Brennkraftmaschine (1), die durch einen mit einer Turbine (13) und einem Verdichter (14) versehenen Turbolader (12) aufgeladen wird und einen Einlasskanal (6) umfasst, der den Verdichter (14) mit einem Einlasskrümmer (4) verbindet, dem ein Luftstrom aus dem Verdichter (14) zugeführt wird, der durch ein Drosselventil (8) geregelt wird und der mit einer Vielzahl von Zylindern (3) verbunden ist; zudem umfassend eine Vielzahl elektromechanischer Stellantriebe (31) für den Betrieb der entsprechenden Zusatzgeräte nach einem der Ansprüche 1 bis 10.

## Revendications

1. Actionneur électromécanique (29) pour faire fonctionner un dispositif auxiliaire d'un moteur à combustion interne (1) comprenant : un moteur électrique (30) qui, par l'intermédiaire d'une transmission (32), entraîne en rotation un arbre (31) qui est conçu de manière à ce qu'il fasse fonctionner le dispositif auxiliaire ; un logement (34) qui est réalisé en un matériau métallique afin de contenir le moteur électrique (30) et la transmission (32) et qui est fermé par un couvercle (35) qui est réalisé en une matière plastique ; un composant électronique (40) qui est conçu de manière à ce qu'il détecte la position angulaire de l'arbre (31) et qui est supporté par le couvercle (35) ; et un circuit de refroidissement (41) qui est défini dans le logement (34) ; l'actionneur électromécanique (29) est **caractérisé en ce que** le circuit de refroidissement (41) comprend un élément de dissipateur thermique (44) pour refroidir le composant électronique (40) par l'intermédiaire d'une conduction, dans lequel l'élément de dissipateur thermique (44) est défini par une console (44) qui est réalisée en un matériau non magnétique conducteur de chaleur, une première extrémité de la console (44) est agencée en contact avec le composant électronique (40) et une seconde extrémité de la console (44) est agencée en contact avec le logement (34).

2. Actionneur selon la revendication 1, dans lequel l'élément de dissipateur thermique (44) comprend une première partie (45) qui comporte une surface supérieure plane, laquelle joue le rôle de support pour le composant électronique (40).

3. Actionneur selon la revendication 1 ou 2, dans lequel l'élément de dissipateur thermique (44) comprend une seconde partie (48), laquelle est ajustée par interférence à l'intérieur du logement (34).

4. Actionneur selon l'une quelconque des revendications précédentes, dans lequel le couvercle amovible (35) comprend une broche anti-rotation (38), laquelle, en utilisation, engage un siège (39) qui est ménagé dans le logement (34) ; l'élément de dissipateur thermique (44) comprend une seconde partie (48), laquelle engage la broche anti-rotation (38).

5. Actionneur selon la revendication 4, dans lequel l'extrémité supérieure (38*) de la broche anti-rotation (38) est munie d'une ouverture (49) qui est ménagée à la fois dans la paroi supérieure et dans la paroi latérale et au travers de laquelle l'élément de dissipateur thermique (44) fait saillie.

6. Actionneur selon l'une quelconque des revendications précédentes, dans lequel l'élément de dissipateur thermique (44) comporte une extrémité supérieure qui présente un profil arrondi en contact avec le logement (34).

7. Actionneur selon l'une quelconque des revendications précédentes, dans lequel l'élément de dissipateur thermique (44) comporte une extrémité supérieure qui est munie d'un élément de ressort (50) en contact avec le logement (34).

8. Actionneur selon l'une quelconque des revendications précédentes, dans lequel l'élément de dissipateur thermique (44) comporte une extrémité supérieure en contact avec le logement (34), laquelle est munie d'une encoche verticale (51).

9. Actionneur selon l'une quelconque des revendications précédentes, dans lequel le couvercle amovible (35) est surmoulé par injection autour de l'élément de dissipateur thermique (44).

10. Actionneur selon l'une quelconque des revendications 1 à 8, dans lequel l'élément de dissipateur thermique (44) est réalisé d'un seul tenant avec le couvercle (35) par collage ou au moyen d'une connexion par inter-verrouillage.

11. Moteur à combustion interne (1), surcomprimé au moyen d'un turbocompresseur (12) qui est équipé d'une turbine (13) et d'un compresseur (14), et comprenant un conduit d'entrée (6) qui connecte le compresseur (14) à un collecteur d'entrée (4), lequel est alimenté avec une circulation d'air qui provient du compresseur (14) et qui est régulée au moyen d'une vanne papillon (8) et est connecté à une pluralité de cylindres (3) ; et comprenant une pluralité d'actionneurs électromécaniques (31) pour le fonctionnement de dispositifs auxiliaires respectifs, lesquels actionneurs électromécaniques sont réalisés selon l'une quelconque des revendications 1 à 10.
